Europäisches Patentamt

(19) European Patent Office

Office européen des brevets

(11) Veröffentlichungsnummer: **0 136 540**
**B1**

(12) **EUROPÄISCHE PATENTSCHRIFT**

(45) Veröffentlichungstag der Patentschrift:
**10.06.87**

(21) Anmeldenummer: **84110289.0**

(22) Anmeldetag: **29.08.84**

(51) Int. Cl.⁴: **C 08 L 77/00**

(54) **Verfahren zur Herstellung von schlagzähen Polyamidformmassen.**

(30) Priorität: **02.09.83 DE 3331730**

(43) Veröffentlichungstag der Anmeldung:
**10.04.85 Patentblatt 85/15**

(45) Bekanntmachung des Hinweises auf die Patenterteilung:
**10.06.87 Patentblatt 87/24**

(84) Benannte Vertragsstaaten:
**BE CH DE FR GB IT LI NL**

(56) Entgegenhaltungen:
**DE-A-3 303 376**
**FR-A-1 505 256**
**GB-A-1 456 628**

(73) Patentinhaber: **BASF Aktiengesellschaft, Carl-Bosch- Strasse 38, D-6700 Ludwigshafen (DE)**

(72) Erfinder: **Theysohn, Rainer, Dr., Am Bruch 38, D-6710 Frankenthal (DE)**
Erfinder: **Dorst, Hans Georg, Dr., Berliner Strasse 23, D-6705 Deidesheim (DE)**
Erfinder: **Mc Kee, Graham Edmund, Dr., Kastanienweg 8, D-6940 Weinheim (DE)**
Erfinder: **Steinberger, Rolf, Dr., Am Moenchhof 47, D-6707 Schifferstadt (DE)**
Erfinder: **Ziegler, Walter, Dr., Starenweg 15, D-6803 Edingen- Neckarhausen (DE)**
Erfinder: **Zahradnik, Franz, Dr., Schwedlerstrasse 120, D-6700 Ludwigshafen (DE)**

**0 136 540**

**Beschreibung**

Gegenstand der Erfindung ist die Herstellung von schlagzähen Polymergemischen auf Basis von Polyamiden, feinteiligen silikatischen verstärkten Füllstoffen mit einer besonderen Beschichtung des Füllstoffes und thermoplastischen Elastomeren.

Die mechanischen Eigenschaften von Polymeren hängen häufig von der Art ihrer Vorbehandlung ab. Es sind bereits verschiedene Verfahren zur Erhöhung der Zähigkeit und Flexibilität und Steifigkeit von Polyamiden bekannt.

So wird entsprechend der Lehre der DE-A-2 713 537 die Schlagzähigkeit von Polyamid 6 durch Einverleiben von ternären Copolymerisaten, die Carboxylgruppen enthalten, verbessert. Solche Polymerisate sind jedoch für spezielle Anwendungszwecke zu wenig steif. Um die Steifigkeit von Polymerisaten zu erhöhen, wurden Polyamidformmassen auch schon mit mineralischen Füllstoffen versehen. Aus der EP-A-21 303 sind Polyamidformmassen bekannt, die silikatische Füllmittel sowie gepfropfte Elastomere enthalten. Es hat sich jedoch herausgestellt, daß die Verbindung der Füllstoffe mit den thermoplastischen Anteilen der Formmasse zu wünschen übrig läßt. In der EP-A-0 117 998 (Dokument gemäß Art. 54 (3) EPÜ) wurden auch schon Polyamidformmassen mit einem silikatischen Füllstoff vorgeschlagen, die zur Zähigkeitsverbesserung mit Elastomeren modifiziert sein können, wobei die Füllstoffe mit einem Organosilan und einem Polyurethan-Ionomeren beschichtet sind. Man wurde jedoch darauf aufmerksam, daß das Qualitätsniveau der so erzeugten Massen nicht immer die gestellten Ansprüche erfüllt.

Es war deshalb die technische Aufgabe gestellt, thermoplastische Formmassen, enthaltend thermoplastische Polyamide, feinteilige silikatische Füllstoffe, die mit einem Organosilan und einem Polyurethan-Ionomeren beschichtet sind und darüber hinaus noch Carboxylgruppen aufweisende thermoplastische Elastomere enthalten, zur Verfügung zu stellen, die bei hoher Steifigkeit und Festigkeit eine erhöhte Kerb- und Bruchzähigkeit aufweisen.

Diese Aufgabe wird gelöst in einem Verfahren zur Herstellung von schlagzähen Polyamid-Formmassen, enthaltend 30 bis 88 Gew.% eines thermoplastischen Polyamids, 10 bis 50 Gew.% eines mit einem Organosilan beschichteten silikatischen verstärkten Füllstoffs, 0,01 bis 5 Gew.% eines Polyurethan-Ionomeren, 2 bis 30 Gew.% eines Carboxylgruppen enthaltenden thermoplastischen Elastomeren und gegebenenfalls üblichen Zusatzmitteln in wirksamen Mengen, wobei man die mit einem Organosilan und einem Polyurethan-Ionomeren beschichteten silikatischen Füllstoffe mit den thermoplastischen Elastomeren und dem thermoplastischen Polyamid oberhalb des Schmelzpunkts des Polyamids mischt, dadurch gekennzeichnet, daß man in einer 1. Stufe die mit einem Organosilan und einem Polyurethan-Ionomeren beschichteten silikatischen Füllstoffe zunächst mit Polyamid oberhalb dessen Schmelzpunkts mischt und in einer 2. Stufe die thermoplastischen Elastomeren in dem Füllstoff enthaltenden Polyamid oberhalb dessen Schmelzpunkts feinverteilt.

Das neue Verfahren hat den Vorteil, daß man verstärkte schlagzähe Polyamidformmassen erhält, die ein gleichmäßig hohes mechanisches Niveau, insbesondere hinsichtlich Reißfestigkeit, Schlagzähigkeit, Kerbschlagzähigkeit und Bruchzähigkeit aufweisen. Die erfindungsgemäße Arbeitsweise war an und für sich nicht angezeigt, da eine zweimalige thermische Belastung des Polyamids als schädlich anzusehen war und vielmehr eine Minderung des Qualitätsniveaus zu erwarten war. Dies gilt um so mehr, als entsprechend der EP-A-21 303 ein Einfluß bei der Art und Reihenfolge der Einarbeitung der Zusätze in das Polyamid nicht zu erwarten war, da dort ausgeführt wird, die Einarbeitung der Pfropfprodukte erfolgt vorzugsweise zusammen mit Glasfaser und/oder anderen Füll- und Verstärkungsstoffen.

Die verwendeten thermoplastischen Polyamide sind bevorzugt gesättigte lineare Polyamide mit einem K-Wert (gemessen nach Fikentscher, Cellulose-Chemie, Band 13 (1932), Seite 58, in 1 gew.%iger Lösung in konz. Schwefelsäure) von 60 bis 85. Geeignet sind beispielsweise Polycaprolactam, Polyhexamethylenadipinsäureamid, Polyhexamethylensebacinsäureamid, Polylaurinlactam, Polyundecanamid, ferner Homo- und Copolyamide die unter Verwendung von Adipinsäure, Acelainsäure, Sebacinsäure, Dodecandisäure, Terephthalsäure einerseits und Hexamethylendiamin, Trimethylhexamethylendiamin, Bis-(4-aminocyclohexyl)-methan, 2,2-Bis-(4-aminocyclohexyl)-propan andererseits hergestellt werden sowie Copolyamide die durch Polykondensation von Lactamen zusammen mit den obengenannten Dicarbonsäuren und Diaminen erhalten werden. Besondere technische Bedeutung haben Polycaprolactam und Polyhexamethylenadipinsäureamid erlangt.

Als silikatische Füllstoffe sind Glasfasern geeignet, vorzugsweise aus E-Glas, die allgemein üblich für die Verstärkung von Polyamidmassen angeboten werden. Die in der Formmasse vorliegenden Glasfasern haben im allgemeinen eine Länge von 0,1 bis 0,5 mm, vorzugsweise 0,15 bis 0,30 mm und einen Durchmesser von etwa 6 bis 20 μm, vorzugsweise 10 bis 14 μm. Weitere bevorzugte silikatische Füllstoffe sind solche mit freien OH-Gruppen an ihrer Oberfläche wie calcinierter Kaolin, Kaolin, Glimmer, Wollastonit, Quarz, Zirkonsilikat oder amorphes $SiO_2$. Man verwendet die Füllstoffe in einer Menge von 10 bis 50 Gew.%, insbesondere 10 bis 40 Gew.%, bezogen auf die Formmasse. Die Partikelgröße der vorgenannten Füllstoffe beträgt vorteilhaft 0,01 bis 10 μm, vorzugsweise 0,05 bis 5 μm, und ihre spezifische Oberfläche ist vorteilhaft größer als 6 m²/g, insbesondere größer als 10 m²/g.

Die silikatischen Füllstoffe sind mit einem Organosilan beschichtet, vorteilhaft in einer Menge von 0,1 bis 3 Gew.%, insbesondere 0,5 bis 2 Gew.%. Zusätzlich sind die silikatischen Füllstoffe mit einem Polyurethan-Ionomeren beschichtet. Die Menge beträgt 0,1 bis 5 Gew.%, bezogen auf die gesamte Formmasse. Besonders bewährt hat sich eine Menge von 0,5 bis 3 Gew.%.

2

Als Organosilane sind die üblichen, für die Beschichtung von Glasfasern oder Füllstoffen bekannten Organosilane, wie Aminoalkylsilane, insbesondere Aminoalkyltrialkoxysilane, wie γ-Aminopropyltriethoxysilan, geeignet.

Die verwendeten Polyurethan-Ionomeren sind Polyurethane, die in ihren Molekülen in größeren Abständen ionische Zentren enthalten. Sie sind Heteropolymere mit ausgeprägter Segmentstruktur (vgl. Angew. Chemie 1970, Nr. 2, Seiten 53 bis 63). Die Polyurethan-Ionomeren sind bekenntlich hochmolekulare Segmentpolymere, die zu makromolekularen Gebilden asoziieren, wodurch Teilchengewichte von über 500.000 entstehen. Durch interchenare Wechselwirkungen (Coulombkräfte und Wasserstoffbrücken) haben sie ähnliche Eigenschaften wie vernetzte Elastomere. In polaren organischen Lösungsmitteln vorliegende Ionomere bilden bei Wasserzusatz spontan stabile wäßrige Dispersionen mit dem Ionomeren als disperse Phase, so daß das sonst übliche Emulgieren entfällt. Nach Entfernen des organischen Lösungsmittels liegen die Polyurethan-Ionomeren als Emulgator und lösungsmittelfreie Dispersionen vor, die in der Regel weder Emulgatoren noch Lösungsmittel enthalten.

Die Polyurethan-Ionomeren sind üblicherweise aufgebaut aus Polyestern aus aliphatischen Dicarbonsäuren und Diolen mit Molekulargewichten von 1000 bis 5000 als Polyolkomponente und aliphatischen, araliphatischen oder aromatischen Diisocyanaten als Polyisocyanatkomponente sowie Salzen von Diaminocarbonsäuren zur Erzeugung der ionischen Zentren im Polyurethan.

Außerordentlich wasserfeste Polyurethan-Ionomere sind solche, die durch Polyisocyanate oder andere reaktive Komponenten, wie Formaldehyd oder seine Derivate, zusätzlich chemisch vernetzt sind. Derartige Polymere sind daher zur Verwendung für die Beschichtung besonders geeignet.

Die Polyurethan-Ionomeren können nach den verschiedenen, dem Fachmann bekannten Verfahren hergestellt werden, z.B. nach dem Emulgator-Scherkraftverfahren, dem Aceton-Verfahren oder dem Schmelzdispergier-Verfahren (vgl. Angewandte makromolekulare Chemie, Band 26, Seiten 85 und 101).

Bevorzugt werden Dispersionen von Polyurethan-Ionomeren, wie sie z.B. in Angewandte Chemie, Band 82, Seiten 53 (1970) näher beschrieben werden. Fermer sind die nach dem Schmelzdispergier-Verfahren, wie es aus der DE-A-1 170 068 und DE-A-1 913 271 bekannt ist, erhaltenem Ionomerdispersionen geeignet.

Die besten Eigenschaften werden mit solchen Dispersionen erhalten, deren dispergierte Teilchen einen mittleren Durchmesser von weniger als 1 Mikrometer und insbesondere von 0,05 bis 0,5 Mikrometer aufweisen. Weiterhin werden Dispersionen solcher Polyurethan-Ionomere bevorzugt, die einen Ionengruppengehalt von 5 bis 30 mÄqu. pro 100 g Trockensubstanz aufweisen.

Zur Erzielung optimaler Eigenschaften ist es weiterhin wünschenswert, daß die dispergierten Polyurethan-Ionomeren selbst zu hochmolekularen Polymeren mit gutem Eigenschaftsbild auftrocknen. Bevorzugt sind solche Polyurethane, welche, wenn man ihre Dispersion auf eine flache Unterlage ausgießt und trocknet, einen Film liefern, der folgende Werte aufweist: Zugfestigkeit größer 50 kp/cm$^2$ (498 N/cm$^2$), vorzugsweise größer 100 kp/cm$^2$ (980 N/cm$^2$); Bruchdehnung 100 bis 600 %; Shore A-Härte 50 bis 90; Wasserquellung bei 20°C kleiner 30 %.

Die Polyurethan-Ionomeren werden in der Regel in Form einer wäßrigen Dispersion aufgebracht, die 10 bis 60, vorzugsweise 20 bis 50 Gew.%, Feststoff enthält. Es hat sich als vorteilhaft erwiesen, wenn man die vorgenannten Organosilane zusammen mit den Polyurethan-Ionomeren auf die Füllstoffe aufbringt.

Der mit der wäßrigen Dispersion des Polyurethan-Ionomeren beschichtete Füllstoff wird anschließend getrocknet, zweckmäßig bei 80 bis 120°C, und gegebenenfalls noch 10 bis 60 min lang thermisch nachbehandelt.

Bevorzugte thermoplastische Elastomere sind Copolymerisate von Ethylen mit Propylen, Vinylester von Fettsäuren mit 2 bis 4 Kohlenstoffatomen oder primären oder sekundären C$_2$- bis C$_8$-Alkylestern der Acrylsäure oder der Methacrylsäure, insbesondere n-Butylacrylat, die Carboxylgruppen enthaltende Monomere, wie Acrylsäure, Methacrylsäure, Maleinsäure oder Maleinsäureanhydrid in einer Menge von 0,5 bis 15 Gew.% einpolymerisiert enthalten. Vorteilhaft sind diese Copolymerisate unvernetzt, d.h. sie sollen zu mindestens 90 % in heißen Lösungsmitteln, wie Toluol, Ethylbenzol oder Tetrachlorethylen löslich sein. Vorzugsweise setzt man Copolymerisate aus 55 bis 79,5 Gew.% Ethylen, 20 bis 40 Gew.%, insbesondere 25 bis 38 Gew.%, eines primären oder sekumdären C$_2$- bis C$_8$-Alkylesters der Acrylsäure oder Methacrylsäure, vorzugsweise n-Butylacrylat, und 0,5 bis 8 Gew.% eines Säuregruppen enthaltenden Monomeren, wie Methacrylsäure oder Acrylsäure oder eines Monomeren mit verkappten Säuregruppen, das unter den Konfektionierbedingungen oder den Polymerisationsbedingungen Carbonsäuregruppen bildet, wie Maleinsäureanhydrid oder tert.-Butyl(meth)acrylat.

Eine andere Gruppe vom bevorzugtem thermoplastischen Elastomeren sind Copolymere von Ethylen mit Propylen, Ethylen mit Vinylestern von C$_1$- bis C$_4$-Fettsäurevinylestern, Ethylen mit C$_2$- bis C$_8$-Alkyl(meth)acrylat und Styrol-Butadien- bzw. -Isopren-Blockpolymerisate, wobei die Carboxylgruppen enthaltenden Monomeren, wie Acrylsäure, Methacrylsäure, Maleinsäure oder Maleinsäureanhydrid nachträglich aufgepfropft wurden. Eine gängige Pfropfmethode wird beispielsweise in der EP-A-21 303 beschrieben. Eine andere Arbeitsweise zum Aufpfropfen von Carboxylgruppen enthaltenden Monomeren wird beispielsweise beschrieben in DE-A-27 03 416.

Bevorzugte thermoplastische Elastomere haben einen Schmelzbereich (Schmelzpunkt zwischen 50 und 100°C) und eine Glasübergangstemperatur unter -20°C. Vorteilhaft verwendet man thermoplastische Elastomere, die einen Schubmodul (nach DIN 53 445) bei -20°C von unter 200, insbesondere unter 100 N/mm$^2$, aufweisen.

3

Die bevorzugten thermoplastischen Elastomeren sind im allgemeinen hochmolekular und haben einen Schmelzindex MFI 190/2,16 (DIN 53 735) von 1 bis 20. Bezogen auf die gesamte Formmasse werden die thermoplastischen Elastomeren in einer Menge von 2 bis 30 Gew.%, insbesondere 5 bis 25 Gew.%, verwendet.

Zusätzlich können die erfindungsgemäßen Formmassen durch übliche Zusatzstoffe, wie Hitze- und Licht-Stabilisatoren, Gleit- und Entformungs-Mittel, Färbemittel wie Farbstoffe und Pigmente in üblichen wirksamen Mengen modifiziert sein.

Ein wesentliches Merkmal der Erfindung ist es, in welcher Reihenfolge die einzelnen Komponenten zusammengebracht werden. Erfindungsgemäß mischt man in einer 1. Stufe die mit einem Organosilan und einem Polyurethan-Ionomeren beschichteten silikatischen Füllstoffe zunächst mit dem Polyamid oberhalb dessen Schmelzpunkts, z.B. Polyamid 6 bei einer Temperatur von 250 bis 270°C. Die Temperatur richtet sich im wesentlichen nach dem Schmelzpunkt des jeweils verwendeten Polyamids. Geeignete Mischvorrichtungen sind beispielsweise Einfach- oder Mehrfach-Schneckenextruder, wie sie in der Technik gebräuchlich sind. In der Regel wird die so erhaltene Mischung dann in Stränge gegossen, gekühlt und granuliert. Das so hergestellte, beschichtete silikatische Füllstoffe enthaltende Polyamid, wird dann z.B. mit dem thermoplastischen Elastomeren gemischt und in einer 2. Stufe das thermoplastische Elastomere in dem Polyamid oberhalb dessen Schmelzpunkts fein verteilt. Dies geschieht z.B. ebenfalls mittels den vorgenannten Vorrichtungen, wie Extrudern oder Schneckenextrudern. Es hat sich bewährt, wenn der Mischvorgang so intensiv ist, daß das thermoplastische Elastomere in Einzelteilchem von < 3 μm, vorzugsweise < 1 μm im Polyamid vorliegt. Die so erhaltene Schmelze wird dann in Stränge gegossen, abgekühlt und gramuliert. Eine Variante der zweiten Stufe ist die, daß das thermoplastische Elastomere in Form eines Konzentrates in Polyamid zum Einsatz kommt.

Die erfindungsgemäßen Formmassen eignen sich zur Herstellung von Formteilen nach dem Spritzguß- oder Extrusionsverfahren.

Das Verfahren nach der Erfindung sei an folgenden Beispielen veranschaulicht.

### Beispiel 1

Endlosstränge aus E-Glasfasern ohne Oberflächenbehandlung wurden mit einer Dispersion, die 50 Gew.% eines ionomeren Polyurethans und 5 Gew.% γ-Aminopropyltriethoxisilan enthielt, getränkt und getrocknet. Die getrockneten Stränge enthielten 1,2 Gew.% Feststoff, bezogen auf die Glasfaser. Die so beschichteten Glasfasern wurden in einem Zweischneckenkneter in geschmolzenes Polycaprolactam vom K-Wert 72 so eingearbeitet, daß die Glasfasermenge 35,3 Gew.% und die mittlere Glasfaserlänge ca. 0,25 mm betrug. Die Schmelze wurde dann ausgetragen, in Stränge gegossen, gekühlt und granuliert. 85 Teile des so erhaltenen Granulats wurden mit 15 Teilen eines Copolymeren aus Ethylen mit 4 Gew.% Acrylsäure und 30 Gew.% n-Butylacrylat vom Schmelzindex MFI 8 (g/10 min 190°C/2,16 kg) vermischt, erneut im Extruder aufgeschmolzen und homogenisiert. Anschließend wurde die Schmelze in Stränge gegossen, gekühlt und granuliert und aus dem erhaltenen Granulat Prüfkörper gespritzt. Die erhaltenen mechanischen Werte sind in nachfolgender Tabelle 1 aufgeführt.

### Beispiel 2 (Vergleich)

Man verfährt wie in Beispiel 1 beschrieben, verwendet jedoch Glasfasern die lediglich mit einer 10 %igen wäßrigen Lösung von γ-Aminopropyltriethoxisilan behandelt wurden. Ansonsten wurde wie in Beispiel 1 verfahren.

### Beispiel 3 (Vergleich)

Man beschichtet Glasfaserm wie in Beispiel 1 beschrieben. 58 Teile Polycaprolactam vom K-Wert 72 wurden mit 15 Teilen eines Copolymeren aus Ethylen mit 4 % Acrylsäure und 30 Gew.% n-Butylacrylat gemischt, auf einen Extruder zusammen aufgeschmolzem und in die Schmelze 30 Teile Glasfasern eingearbeitet. Die Schmelze wird in Stränge gegossen, ausgekühlt und granuliert und das Polymere zu Prüfkörpern spritzgegossen. Die mechanischen Werte sind aus nachfolgender Tabelle 1 zu entnehmem.

**Tabelle 1**

| Beispiel | Reißfestigkeit (Nmm²) | mittl. GF-Länge (mm) | Schlagzähigkeit (kJm⁻²) | Bruchzähigkeit (Nm) | Kerbschlagzähigkeit (kJm⁻²) |
|---|---|---|---|---|---|
| 1 | 120 | 0,18 | 72 | 17 | 23 |
| 2 | 110 | 0,16 | 50 | 5 | 15 |
| 3 | 75 | 0,25 | 25 | 1,5 | 11 |

**Beispiel 4**

Unbehandelte Endlosstränge aus E-Glasfasern wurden mit einer wäßrigen Dispersion, die 50 Gew.% eines ionomeren Polyurethans und 5 Gew.% $\gamma$-Aminopropyltriethoxisilan enthält, getränkt und getrocknet. Die getrockneten Stränge enthielten 1,2 Gew.% Feststoff, bezogen auf Glas.

In einer Dispersion gleicher Zusammensetzung wurde die doppelte Menge Wasser zugegeben und dann 20 % Wollastonit von einem mittleren Teilchendurchmesser von 10 µm eingerührt und 30 min durchmischt. Anschließend wurde über eine Fritte abgesaugt und bei 80°C getrocknet. Die Gewichtszunahme des Wollastonits betrug 2,1 Gew.%.

20 Teile des so behandelten Wollastonits wurden mit 65 Teilen Polycaprolactam vom K-Wert 72 gemischt, in einen Extruder aufgeschmolzen und in der Schmelze gemischt und in die flüssige Mischung 10 Teile der beschichteten Glasfaser zugegeben. Die Mischung wurde in Stränge gegossen, gekühlt und granuliert. 95 Teile des so erhaltenen Granulats wurden mit 5 Teilen eines Copolymerisats aus Ethylen mit 4 % Acrylsäure und 30 % n-Butylacrylat gemischt, in einem Extruder erneut aufgeschmolzen und homogenisiert, die Schmelze in Stränge gegossen, gekühlt und granuliert. Die mechanischen Werte der daraus gegossenen Prüfkörper sind aus Tabelle 2 ersichtlich.

**Beispiel 5** (Vergleich)

Man verfährt wie in Beispiel 4 beschrieben mit dem Unterschied, daß der verwendete Wollastonit lediglich mit $\gamma$-Aminopropyltriethoxisilan beschichtet war. Ansonsten unterscheidet sich die Arbeitsweise nicht von Beispiel 4. Die erhaltenen Werte an den Spritzgußkörpern sind aus Tabelle 2 ersichtlich.

**Beispiel 6** (Vergleich)

65 Teile Polycaprolactam vom K-Wert 72 und 5 Teile eines Copolymeren wie im Beispiel 4 beschrieben, werden mit 20 Teilen Wollastonit, der wie in Beispiel 4 beschichtet wird, mechanisch gemischt und das Gemisch einem Zweiwellenextruder zugeführt und die Polymeren aufgeschmolzen. In das aufgeschmolzene Gemisch wurden stromabwärts 10 Teile Glasfaser, die wie im Beispiel 4 beschichtet wurde, zugegeben und alles homogen dispergiert. Die Schmelze wird in Stränge gegossen, gekühlt und granuliert. Die mechanischen Werte der daraus erzeugten Spritzgußkörper sind aus Tabelle 2 ersichtlich.

**Tabelle 2**

| Beispiel | Reißfestigkeit (Nmm⁻²) | Schlagzähigkeit (kJm⁻²) | Bruchzähigkeit (Nm) | Kerbschlagzähigkeit (kJm⁻²) |
|---|---|---|---|---|
| 4 | 120 | 61 | 11 | 17 |
| 5 | 118 | 35 | 2 | 12 |
| 6 | 100 | 33 | 6 | 13 |

**Patentanspruch**

Verfahren zur Herstellung von schlagzähen Polyamidpormmassen, enthaltend 30 bis 88 Gew.% eines thermoplastischen Polyamids, 10 bis 50 Gew.% eines mit Organosilan beschichteten silikatischen Füllstoffs, 0,1 bis 5 Gew.% eines Polyurethan-Ionomeren, 2 bis 30 Gew.% eines Carboxylgruppen enthaltenden thermoplastischen Elastomeren und gegebenenfalls übliche Zusatzmittel in wirksamen Mengen, wobei man die mit einem Organosilan und einem Polyurethan-Ionomeren beschichteten silikatischen Füllstoffe mit dem thermoplastischen Elastomeren und Polyamid oberhalb des Schmelzpunktes des Polyamids mischt, <u>dadurch gekennzeichnet</u>, daß man in einer 1. Stufe die mit einem Organosilan und einem Polyurethan-Ionomerem beschichteten silikatischen Füllstoffe zunächst mit Polyamid oberhalb dessen Schmelzpunkts mischt und in einer 2. Stufe die thermoplastischen Elastomeren in dem Füllstoff enthaltenden Polyamid oberhalb dessen Schmelzpunkts fein verteilt.

**Claim**

A process for the preparation of high-impact nylon molding materials, containing 30 to 88% by weight of a thermoplastic nylon, 10 to 50% by weight of an organosilane-coated silicate filler, 0.1 to 5% by weight of a polyurethane ionomer, 2 to 30% by weight of a carboxyl-containing thermoplastic elastomer and, if desired, effective amounts of conventional additives, the silicate filler coated with an organosilane and a polyurethane ionomer being mixed with the thermoplastic elastomer and the nylon at above the melting point of the latter, wherein, in a first stage, the silicate filler coated with an organosilane and a polyurethane ionomer is mixed with the nylon at above the melting point of the latter, and, in a second stage, the thermoplastic elastomer is finely dispersed in the filler-containing nylon at above the melting point of the latter.

**Revendication**

Procédé de préparation de matières à mouler à base de polyamide, résistant aux chocs, comprenant 30 à 88 % en poids d'un polyamide thermoplastique, 10 à 50 % en poids d'une matière de charge silicatée, enduite d'un organosilane, 0,1 à 5 % en poids d'un ionomère de polyuréthanne et 2 à 30 % en poids d'un élastomère thermoplastique à groupes carboxyle, ainsi qu'éventuellement des additifs usuels en des proportions efficaces, les matières de charge enduites d'un organo-silane et d'un ionomère de polyuréthanne étant mélangées à l'élastomère thermoplastique et au polyamide à une température supérieure au point de fusion de ce dernier, caractérisé en ce que l'on mélange, dans un premier stade, les matières de charge enduites d'un organo-silane et d'un ionomère de polyuréthanne et le polyamide à une température supérieure au point de fusion de ce dernier, puis on distribue finement, dans un deuxième stade, les élastomères thermoplastiques dans le mélange du polyamide et de la matière de charge à une température supérieure au point de fusion du polyamide.